# EUROPEAN PATENT APPLICATION

(11) **EP 1 317 156 A1**
(43) Date of publication of application: **04.06.2003**
(21) Application number: 01440404.0
(22) Date of filing: 28.11.2001
(51) Int. Cl.: H04Q 7/32, H04Q 7/38, H04B 1/16

(54) **Method of operating a mobile station in an energy saving mode**

(71) Applicant: ALCATEL, 75008 Paris (FR)
(72) Inventor: Landais, Bruno, 22560 Pleumeur-Bodou (FR); Muniere, Vincent, 75015 Paris (FR)
(74) Representative: Brose, Gerhard

(57) **Abstract**

Method of operating a Mobile Station in a energy saving mode, in particular using the Discontinuous Reception (DRX) mode, within a Mobile Radio Communication System (MRS). The MRS comprises at least a Base Station Subsystem (BSS) having a Base Transceiver Station (BTS) and a Base Station Controller (BSC), a Circuit Switched Core Network and a Packet Switched Core Network, wherein lu-interfaces are provided for connecting the Base Station Subsystem (BSS) with the Circuit Switched Core Network and the Packet Switched Core Network. Parameters indicating settings for the energy saving mode of the Mobile Station are stored within the Base Station Subsystem (BSS).

## Description

### Field of the Invention

The invention relates to a method for energy saving of a mobile station, and in particular to a method regarding the Discontinuous Reception mode (DRX) as well to a Base Station Subsystem, Base Station Controller, Base Transceiver Station, a Packet Control Unit (PCU) and Mobile Radio Communication System

### Background of the Invention

Discontinuous Reception (DRX) is a known method in the Global System for Mobile communications (GSM) and in General Packet Radio Services (GPRS) for preserving the energy consumption of a Mobile Station (MS) when not involved in a GSM call or in a GPRS session.

Thereby, a plurality of Mobile Stations are divided into Paging Groups, for example based on their International Mobile Subscribers Identity (IMSI) and thus a MS only has to decode information in the specific paging blocks corresponding to its Paging Group instead of having to decode information in all paging blocks of the paging channel. That means, the receiver of a MS is only activated for time periods or time slots of the Multi-Frames associated to the paging group. In the other time periods the receiver is operated in a special energy saving mode, wherein a synchronisation with the Broadcast Control Channel (BCCH) or Packet Broadcast Control Channel (PBCCH) is maintained by an internal timer. A measurement of the BCCH carrier is only taken during unused time slots of the paging blocks. This leads to a reduced power consumption and an increased standby life of batteries of the MS.

In more details, the operation of the MS in DRX mode is controlled by DRX parameters when the MS is attached to GPRS services. Upon GPRS attach, the MS transfers to the Serving GPRS Support Node (SGSN) the DRX parameters which will be used. The DRX parameters control the settings of the DRX mode. The DRX parameters comprise for example the Split-PG-Cycle parameter, a flag indicating whether Split_PG_Cycle is supported on Common Control Channels (CCCH), since it is only mandatory on Packet Common Control Channel (PCCCH) and a non-DRX timer. DRX parameters are used by the Base Station Subsystem (BSS) to compute the paging blocks where to page the MS when required. In order for the BSS to know those DRX parameters, when operating in GERAN A/Gb mode, the DRX parameters are sent together with the paging messages sent on the Gb interface, which is an interface between SGSN and BSS. The paging message sent on the Gb interface, can come from the Serving GPRS Support Node (SGSN) or from the Mobile services Switching Centre (MSC) in case the Gs interface is supported between the SGSN and the MSC.

However, the DRX parameters are not used by the BSS when it receives a paging message directly from the Mobile Switching Centre (MSC) over the A interface. Indeed, when an MS is only IMSI-attached or it is also GPRS-attached but there is no Gs interface, all paging messages originated by the Mobile Switching Centre (MSC) to which the MS is attached for circuit-switched services are sent over the A interface. Since the MSC is not provided with the DRX parameters at IMSI attach, it cannot include those with the paging message. This results from the fact that the A-interface and the IMSI attach procedures were designed a couple of years ago, when the DRX mode parameters were not yet introduced.

With the introduction of GERAN lu mode, which stands for GSM/EDGE Radio Access Network operated in lu mode, a BSS is connected to a 3G Core Network, in particular a 3G Circuit Switched Core Network and/or a Packet Switched Core Network, via lu interfaces. In other words: the interfaces between the GSM/EDGE Radio Access Network and the Core Network will no longer be based on the A and Gb interfaces but on the lu-Circuit Switched and the lu-Packet Switched Interfaces introduced in the scope of the Universal Mobile Telecommunication System (UMTS). The lu interfaces are located between the GERAN and the 3G Core Network and the signalling protocol used over lu is called Radio Access Network Application Part (RANAP). The RANAP protocol designed for UMTS when the Radio Access Network is based on W-CDMA technology is planned to be re-used as such and with as few modifications as possible when the Radio Access Network is based on GSM/EDGE technology. Now, the RANAP protocol does not contain the GPRS DRX parameters specific to GSM/EDGE Radio Access. In addition, while the SGNS gets the DRX parameters through the GPRS Attach procedure, the MSC does not know the DRX parameters.

However, it was decided to harmonise the paging procedure in GERAN lu mode, since the BSS will co-ordinate the paging messages whether they are received from an MSC or from an SGSN. To that avail, it was decided that the BSS in GERAN lu mode should use the DRX parameters even if it receives a paging request from the MSC of the 3G Core Network.

A known proposal for this harmonisation requires a changing in the lu interface in order to convey the GPRS DRX parameters in paging messages sent using the RANAP protocol. In addition, it also requires changing the IMSI Attach and Location Area Update procedures so that the MS makes known to the MSC its DRX parameters, like is does to the SGSN at the GPRS Attach and possibly at Routing Area Update. However, this approach has several drawbacks, mainly that a lot of changes are required to already existing procedures and interfaces, especially the lu interfaces, while the purpose of the Third Generation Partnership Project Technical Specification Group GERAN (3GPP TSG GERAN) is to minimise changes, especially regarding the lu interfaces.

### Summary of the Invention

It is an object of the invention to provide a method of operating a Mobile Station in an energy saving mode as well a Base Station Subsystem, Base Station Controller, Base Transceiver Station; Packet Control Unit and a Mobile Radio Communication System which avoid the above mentioned problems of the state of the art.

Another object of the present invention is to enable it, that parameters controlling the energy saving settings of the Mobile Station are handled in a more flexible and efficient way while avoiding the aforementioned extensive changes.

These objects are achieved by a method according to claim 1, a Base Station Subsystem (BSS) according to claim 13, a Base Station Controller (BSC) according to claim 14, a Base Transceiver Station (BTS) according to claim 15, a Packet Control Unit (PCU) according to claim 16 and a Mobile Radio Communication System (MRS) according to claim 17.

With respect to the method according to the invention, parameters controlling the settings for the energy saving mode of the Mobile Station are stored in the Base Station Subsystem (BSS), preferable in a Serving and/or Drift Base Station Subsystem. A BSS according to the invention is adapted for receiving and storing the parameters controlling the energy saving settings of a Mobile station (MS) as well as for broadcasting the default parameters Broadcast Control Channel (BCCH) and/or Packet Broadcast Control Channel (PBCCH) and/or Packet Common Control Channel (PCCCH) to the Mobile Station (MS). It should be noted, that the term Base Station Subsystem (BSS) also stands for a GSM/EDGE Radio Access Network (RAN).

In an advantageous manner the parameters are stored at a place within a Mobile Radio system (MRS), namely the BSS, where the parameters are preferably used. In other words: the parameters are stored in the network element which will make use of them instead of storing them in the MSC or SGSN, which requires passing them to the BSS using the appropriate interfaces. In particular, the method avoids having to transfer these parameters first from the MS to the MSC or SGSN via the Radio, Abis and lu interfaces, and then from the MSC or SGSN back to the BSS via the lu interfaces. Therefore, a changing or adapting of the lu interfaces and its associated signalling protocol, namely RANAP, is avoided. By storing the parameters within the BSS it becomes possible to use them in lower layer messages. Thus, a basis for a more flexible and efficient way to handle these parameters is provided. Thereby, an impact on higher layer messages caused by introducing the method according to the invention is avoided too.

A BSC according to the invention is adapted for receiving and storing parameters controlling energy saving settings of a MS as well as for broadcasting default parameters on BCCH or PBCCH or PCCCH to the MS. Architecture-wise, a big amount of signalling and protocol related matters of the BSS is provided and handled by the BSC. Therefore, the BSC is a preferable place for storing the parameters.

However, in light of the signalling and protocol architecture of a certain Mobile Radio system or BSS respectively, the BTS could be also involved in processing signalling or protocol information. Also, the BTS is the closest network element to the radio interface. Therefore, it could be advantageous to store the parameters in the BTS. This is in particular the case, if the parameters controlling settings of the energy saving mode of the MS are transferred to the BTS for processing or computing paging related information regarding the MS. Therefore a BTS according to the invention may be adapted for receiving and storing parameters controlling energy saving settings of a MS as well for broadcasting default parameters on BCCH or PBCCH or PCCCH to the MS.

Also, because the PCU is in charge of broadcasting data on the PBCCH and PCCCH channels, it may be advantageous to store the parameters in the PCU. This is in particular the case, if the parameters controlling settings of the energy saving mode of the MS are transferred to the PCU for processing or computing paging related information regarding the MS. Therefore a PCU according to the invention may be adapted for receiving and storing parameters controlling energy saving settings of a MS as well for broadcasting default parameters on BCCH or PBCCH or PCCCH to the MS.

In an advantageous improvement of the invention, the parameters controlling the energy saving settings are transferred from the Mobile Station to the BSS during a Radio Resource Control (RRC) connection set-up. In particular, this could be done , when the MS sends the RRC Connection Request message or the RRC Connection Set-up Complete message. Thereby, in an advantageous manner the BSS uses the received parameters, when it has to page the MS, while the MS is in RRC Connected mode. Using the RRC Connection set-up procedure for transmitting the parameters, will only require changing or adapting this RRC procedure, which is purely radio interface related and still not defined in details in GERAN lu mode.

According to a further development of the invention, default parameters controlling energy saving settings are defined, preferably at the BSS, and are broadcast on the Broadcast Control Channel (BCCH) and/or Packet Broadcast Control Channel (PBCCH) and/or Packet Common Control Channel (PCCCH). Such default parameters are used for Mobile Stations in RRC Idle Mode.

Because the BSS may have to page the MS while it is in RRC Idle Mode, e.g. in case of Mobile Terminated call set-up, and the parameters controlling the energy saving mode of the MS are not known to the BSS since no RRC connection has already been set-up with the Mobile Station, default parameters are defined and broadcast on the BCCH and/or PBCCH and/or PCCCH. These parameters are then used by the BSS and the MS when computing the paging blocks addressed to the MS while in RRC Idle Mode.

In another advantageous improvement of the invention, the parameters controlling the energy saving settings are transferred from a serving BSS to another one upon serving BSS relocation. Indeed, when a MS has an RRC connection established towards a serving BSS, if it moves under coverage of another BSS, the network may decide to relocate the serving BSS from the current one to the new BSS which covers the MS. To that avail, the Serving BSS Relocation procedure is used and it allows maintaining the RRC connection alive as well as transferring the on-going Radio Access Bearers to the new serving BSS. The lur-g or lu interfaces may be used to transfer the MS context and the relevant messages on those interfaces can be extended to include the DRX parameters.

By using the aforementioned embodiments of the invention it is ensured that the parameters controlling the energy saving settings are always available, namely in the form of default parameters or/and actual MS-provided parameters, for the BSS to be able to page the MS. It is advantageous to use the BCCH and PBCCH for broadcasting the default parameters to the MS in RRC Idle Mode, because the BCCH and PBCCH are especially also monitored by the MS in RRC Idle mode. It is also advantageous to use the PCCCH for distributing the default parameters to the MS in RRC Idle Mode, because the messages sent on the PCCCH channel contain a distribution part which is read by all Mobile Stations in RRC Idle Mode.

Other objects and advantages of the present invention may be ascertained from a reading of the specification and appended claims in conjunction with accompanying drawing wherein:

### Brief Description of the Drawings

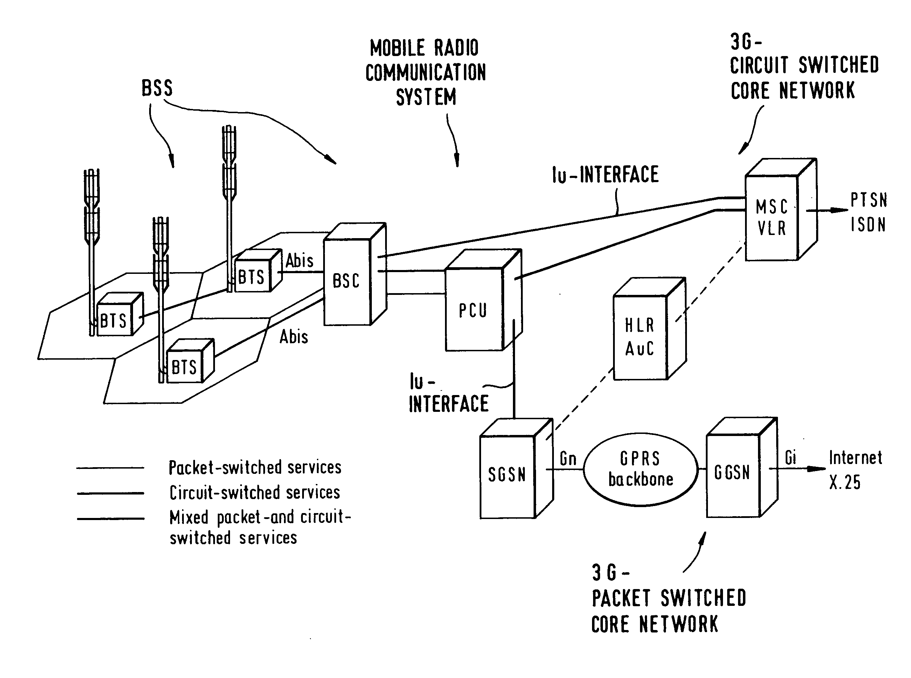

Preferred embodiments of the present invention will now be described with reference to the accompanying drawings in which
figure 1 shows a schematic block diagram of a GERAN lu mode network.

### Detailed Description of the Invention

Referring to Fig. 1, a GERAN lu mode network is described in a schematic block diagram.

The general architecture of a GERAN lu mode network comprises a BSS, which is also called a GSM/EDGE Radio Access Network (GERAN), connected via lu interfaces to 3G circuit switched and packet switch core networks. The lu interfaces are known for a person skilled in the art of UMTS and are provided as lu circuit switched and lu packet switched interfaces. The 3G Circuit-Switched Core network comprises among other components an MSC connected to circuit switched networks as PTSN and ISDN. The 3G Packet-switched Core network comprises, especially in form of a GPRS network, a Serving GPRS Support Node (SGSN) and a Gateway GPRS Support Node (GGSN), which is connected to packet switched networks such as X.25 and Internet. Reference numeral X indicates a GPRS backbone.

The Circuit Switched Service, for example GSM and High Speed Circuit Switched Data (HSCSD), of the Circuit-Switched Core Network and the Packet Switched Services, for example GPRS, use in general the same BSS architecture. A BSS or GERAN controls typically several BTSs and there is at least one BSC connected with the BTSs. The BSC is connected with the MSC via the lu-cs interface. For connecting the Packet Switched Network with the BSS, a Packet Control Unit (PCU)may be interconnected between the BSC and SGSN, whereby the PCU and the SGSN are connected via the lu-ps interface. The PCU is considered as part of the BSS. Also a direct connection from the PCU to the MSC may be provided.

For operating an MS in an energy saving mode, the DRX mode is known from the GSM and GPRS, as already described in the introduction of the document. The settings of the DRX mode are controlled by the so-called DRX parameters.

A basic idea of the present invention is to store the related DRX parameters within the BSS. In a preferred embodiment the DRX parameters are stored in the BSC, because the BSC is usually responsible for handling a great amount of the signalling and protocol information. This does not exclude, that in some cases, it might be advantageous to store the DRX parameters in the BTS or even the PCU.

Storing the parameters within the BSS allows that the paging procedure in GERAN lu mode can be harmonised in such a way that the BSS coordinates the paging messages, wherein higher level messages and the lu interfaces have not to be adapted in order to achieve that harmonisation.

Another idea of the present invention is that the DRX parameters are transferred to the BSS using the RRC connection set-up procedure. That means, that the parameters are preferably transferred together with the RRC Connection Request message or RRC Connection Set-up Complete message. Of course, the combining of the DRX parameters with the RRC messages could be done not only by attaching, but also by inserting a certain code within the message, expanding the instruction or messages sets of the RRC messages respectively, or other methods known by a person skilled of the art. Such DRX parameters, transferred with the RRC messages, are used for paging the MS, after an RRC connection with the MS has been established.

For paging a MS which is operating in RRC Idle mode, a different procedure is used. For this, default DRX parameters are defined and broadcast on the BCCH and/or PBCCH and/or PCCCH. The default DRX parameters are predetermined, wherein single default parameters or special sets of default parameters could be provided for different applications or situations. The DRX default parameters are preferably stored within the BSS. In order to provide the MSs with the default DRX parameters, they are broadcast on the BCCH and/or PBCCH and/or PCCCH. Using the RRC Connection Set-up procedure as well as broadcast channel(s) has the advantages, that only the RRC Connection Procedure itself, the broadcast channel contents and radio interfaces related thereto have to be adapted or changed in order to introduce the BSS paging procedure harmonisation for GERAN lu mode as described before in this specification. There is no impact on higher layer messages or lu interface for such harmonisation.

Another advantages of the present invention is the using of the lu-rg and lu interfaces and the associated signalling protocol RNSAP and RANAP respectively, for transferring the DRX parameters of a MS from one BSS to another. Indeed, the lu-rg interface is a point-to-point logical interface between two BSSs. It is used in particular to transfer the context of a MS when such a MS moves from the coverage of one BSS to another and it has an RRC connection established in the BSS it is coming from. According to this invention, the latter BSS has received the DRX parameters of the MS upon RRC connection set-up. In order to avoid requesting the MS to send again those parameters, the MS context exchanged between the two BSSs upon relocation of the serving BSS for that Mobile Station, can be extended to contain the DRX parameters. Similarly, when the lu interface is used instead to perform the Serving BSS relocation procedure, the MS context exchanged between the two BSSs can be extended to contain the DRX parameters.

## Claims

1. Method of operating a Mobile Station in an energy saving mode, in particular using the Discontinuous Reception (DRX) mode, within a Mobile Radio Communication System (MRS), in particular utilising a GSM/EDGE Radio Access Network (GERAN) in lu-mode, comprising a Base Station Subsystem (BSS) connected to a Circuit Switched Core Network and/or a Packet Switched Core Network, wherein lu-interfaces are provided for connecting the Base Station Subsystem (BSS) with the Circuit Switched Core Network and the Packet Switched Core Network,
**characterised in that**,
parameters controlling settings for the energy saving mode of the Mobile Station (MS) are stored within the Base Station Subsystem (BSS).

2. Method according to claim 1, **characterised in that**, said parameters controlling settings for the energy saving mode of the Mobile Station (MS) are stored within a Serving Base Station Subsystem (BSS) which presently controls the Mobile Station (MS) when said Mobile Station (MS) is in Radio Resource Control (RRC) Connected Mode.

3. Method according to claim 1 or 2, **characterised in that,** said parameters controlling settings for the energy saving mode of the Mobile Station (MS), are stored within a Drift Base Station Subsystem (BSS) under which coverage the Mobile Station (MS) is, when said Mobile Station (MS) is in Radio Resource Control (RRC) Connected Mode.

4. Method according to one of the claims 1 to 3,
**characterised in that,** said parameters controlling settings for the energy saving mode of the Mobile Station (MS) are transferred from the Mobile Station (MS) to the Base Station Subsystem (BSS) during the Radio Resource Control (RRC) connection set-up procedure.

5. Method according to one of the claims 1 to 4,
**characterised in that**, default parameters controlling settings for the energy saving mode of the Mobile Station (MS), are used within the Base Station Subsystem (BSS) and the Mobile Station (MS) when said Mobile Station (MS) is in Radio Resource Control (RRC) Idle Mode.

6. Method according to claim 5, **characterised in that**, values of said default parameters controlling settings for the energy saving mode of the Mobile Station (MS) are broadcast on the Broadcast Control Channel (BCCH) and/or Packet Broadcast Control Channel (PBCCH) and/or Packet Common Control Channel (PCCCH).

7. Method according to one of the claims 1 to 6,
**characterised in that**, said parameters controlling settings for the energy saving mode of the Mobile Station (MS) are used by the Base Station Subsystem (BSS) when computing the occurrence of the paging blocks addressed to the Mobile Station (MS).

8. Method according to one of the claims 1 to 7, wherein the Base Station Subsystem (BSS) comprises a Base Station Controller (BSC)
**characterised in that**, said parameters controlling settings for the energy saving mode of the Mobile Station (MS) are stored at the Base Station Controller (BSC) and said default parameters are broadcast by the Base Station Controller (BSC).

9. Method according to one of the claims 1 to 8, wherein the Base Station Subsystem (BSS) comprises a Base Transceiver Station (BTS)
**characterised in that**, said parameters controlling settings for the energy saving mode of the Mobile Station (MS) are stored at the Base Transceiver Station (BTS) and said default parameters are broadcast by the Base Transceiver Station (BTS).

10. Method according to one of the claims 1 to 9, wherein the Base Station Subsystem (BSS) comprises a Packet Control Unit (PCU),
**characterised in that**, said parameters controlling settings for the energy saving mode of the Mobile Station (MS) are stored at the Packet Control Unit (PCU) and said default parameters are broadcast by the Packet Control Unit (PCU).

11. Method according to one of the claims 1 to 10,
**characterised in that**, said parameters controlling settings for the energy saving mode of the Mobile Station (MS) and stored in the Serving Base Station Subsystem (BSS) are transferred to another Base Station Subsystem upon Serving Base Station Subsystem (BSS) relocation for a Mobile Station (MS), in particular operating in GERAN lu mode.

12. Method according to claim 11, **characterised in that**, said parameters controlling settings for the energy saving mode of the Mobile Station (MS) are transferred upon serving Base Station Subsystem (BSS) relocation using either the lur-g interface or the lu interface.

13. Base Station Subsystem (BSS) for executing the method according to one of the claims 1 to 12, **characterised in that**, said Base Station Subsystem (BSS) is adapted for receiving and storing parameters controlling settings for the energy saving mode of the Mobile Station (MS) and for broadcasting default parameters on Broadcast Control Channel (BCCH) and/or Packet Broadcast Control Channel (PBCCH) and/or Packet Common Control Channel (PCCCH) to the Mobile Station (MS).

14. Base Station Controller (BSC) for executing the method according to one of the claims 1 to 12, **characterised in that,** said Base Station Controller (BSC) is adapted for receiving and storing parameters controlling settings for the energy saving mode of the Mobile Station (MS) and for broadcasting default parameters on Broadcast Control Channel (BCCH) and/or Packet Broadcast Control Channel (PBCCH) and/or Packet Common Control Channel (PCCCH) to the Mobile Station (MS).

15. Base Transceiver Station (BTS) for executing the method according to one of the claims 1 to 12, **characterised in that**, said Base Transceiver Station (BTS) is adapted for receiving and storing parameters controlling settings for the energy saving mode of the Mobile Station (MS) and for broadcasting default parameters on Broadcast Control Channel (BCCH) and/or Packet Broadcast Control Channel (PBCCH) and/or Packet Common Control Channel (PCCCH) to the Mobile Station (MS).

16. Packet Control Unit (PCU) for executing the method according to one of the claims 1 to 12, **characterised in that**, said Packet Control Unit (PCU) is adapted for receiving and storing parameters controlling settings for the energy saving mode of the Mobile Station (MS) and for broadcasting default parameters on Broadcast Control Channel (BCCH) and/or Packet Broadcast Control Channel (PBCCH) and/or Packet Common Control Channel (PCCCH) to the Mobile Station (MS).

17. Mobile Radio System (MRS) for executing the method according to one of the claims 1 to 6, **characterised in that**, said Mobile Radio System (MRS) comprises a network element adapted for receiving and storing parameters controlling settings for the energy saving mode of the Mobile Station (MS) and for transmitting default parameters on a broadcast control channel or/and common control channel or/and dedicated control channel to the Mobile Station (MS).
